# FASCICULE DE BREVET EUROPEEN

(11) **EP 3 901 512 B1**
(45) Date de publication et mention de la délivrance du brevet: **05.04.2023**
(21) Numéro de dépôt: 21169276.9
(22) Date de dépôt: 20.04.2021
(51) Int. Cl.: F16N 21/04, F16N 29/00, F16N 21/02

(54) **DISPOSITIF DE LEVEE DE DOUTE DE MISE HORS PRESSION D'UN GRAISSEUR**
VORRICHTUNG ZUR ZWEIFELSFREIEN ERKENNUNG DER DRUCKENTLASTUNG EINER SCHMIERVORRICHTUNG
DECISION DEVICE FOR REMOVING PRESSURE FROM A GREASER

(30) Priorité: 20.04.2020 FR 2003945
(43) Date de publication de la demande: 27.10.2021
(73) Titulaire: GRTgaz, 92270 Bois-Colombes (FR)
(72) Inventeur: KRYSIAK, Didier, 62750 LOOS EN GOHELLE (FR)
(74) Mandataire: Cornuejols, Georges

(56) Documents cités:
- EP-A2- 1 653 147
- US-A1- 2017 009 938
- US-A1- 2017 248 271
- US-A1- 2018 313 495

## Description

### Domaine technique de l'invention

La présente invention vise un dispositif de levée de doute de mise hors pression d'un graisseur. Elle s'applique, notamment, aux domaines des réseaux de gaz combustibles, notamment gaz naturel et biogaz et des robinets, machines et autres organes que ces réseaux mettent en oeuvre.

### État de la technique

Les graisseurs sont des organes restant à demeure sur des machines, par exemple des machines tournantes, robinets ou autres organes. Ils permettent l'injection de lubrifiant entre des pièces en mouvement relatif. Ces graisseurs comportent un clapet anti-retour évitant que le lubrifiant ressorte ou que du gaz s'échappe à travers le graisseur. Ce clapet anti-retour est conçu pour résister à une forte pression interne, par exemple de 200 bar. Il est cependant soumis à la corrosion.

Lors d'une intervention sur un graisseur, pour injecter du lubrifiant dans un robinet, une machine ou un autre organe, pour vérifier l'étanchéité du clapet ou pour démonter le graisseur, un opérateur utilise de l'eau savonneuse pour visualiser des bulles en cas de fuite et utilise un outil pointu, par exemple une pointe ou un tournevis, pour appuyer sur la face externe du clapet. Cette levée de doute manuelle nécessaire au regard de la présence potentielle de pression liée à une défaillance interne de clapet anti-retour, présente d'une part, un danger pour l'opérateur, qui peut recevoir du lubrifiant et/ou du gaz sous pression et un danger pour l'environnement car du gaz inflammable peut s'échapper dans l'atmosphère. De plus, ces opérations manuelles peuvent, sur un graisseur fragilisé, provoquer un éclatement du graisseur mettant en danger l'opérateur.

On connait les demandes de brevet EP 1653 147 et US 2017/009 938, qui divulguent des dispositifs de mesure de pression d'un graisseur.

### Exposé de l'invention

La présente invention vise à remédier à tout ou partie de ces inconvénients.

A cet effet, la présente invention vise un dispositif de levée de doute de mise hors pression d'un graisseur, qui comporte :
- un logement d'accueil d'une tête du graisseur configuré pour interdire des mouvements de la tête du graisseur parallèlement à un axe,
- un pointeau présentant une extrémité d'appui sur un clapet du graisseur,
- un moyen de mise en mouvement du pointeau vers le logement d'accueil, parallèlement à l'axe et
- une ouverture d'échappement d'un gaz provenant du clapet anti-retour.

Grâce à ces dispositions, lors d'une intervention sur un graisseur, un opérateur positionne le dispositif sur la tête du graisseur de manière à ce que cette tête soit retenue dans le logement d'accueil, puis provoque le déplacement du pointeau vers le clapet, ce qui a pour effet d'ouvrir le clapet. Si du gaz s'échappe, il est guidé par l'ouverture d'échappement dans une direction donnée dans laquelle l'opérateur évite de se trouver. Les risques corporels exposés ci-dessus sont ainsi limités. De plus, puisque l'appui du pointeau sur le clapet est contrôlé, l'application de l'effort sur le clapet présente de faibles risques d'endommagement du clapet. La durée de vie du graisseur est ainsi augmentée.

Dans des modes de réalisation, le logement d'accueil comporte deux rails parallèles de guidage et de retenue de la tête du graisseur et une butée à une extrémité des rails de guidage.

Grâce à ces dispositions, la mise en place précise du dispositif sur un graisseur est particulièrement simple puisqu'il suffit de faire glisser la tête du graisseur dans le logement d'accueil jusqu'à la butée. Une fois en butée, la tête du graisseur présente le clapet anti-retour en regard du pointeau, c'est-à-dire que le déplacement du pointeau parallèlement à l'axe le mène directement en appui sur le clapet.

Dans des modes de réalisation, le dispositif objet de l'invention comporte une pièce mobile interne dont une face, munie d'un joint en forme de courbe fermée, débouche dans le logement d'accueil.

Grâce à ces dispositions, une fois la tête du graisseur positionnée dans le logement d'accueil, le joint, par exemple torique, entoure le clapet. Des fuites de lubrifiant et/ou de gaz à travers le logement d'accueil sont ainsi évitées ou limitées.

Dans des modes de réalisation, le dispositif objet de l'invention comporte un ressort interne en appui sur la pièce mobile, la pièce mobile interne étant guidée en translation par le pointeau.

Grâce à ces dispositions, la pièce mobile peut se rétracter dans le corps du dispositif pendant l'introduction ou le retrait de la tête du graisseur, ce qui limite l'usure du joint. Dans des modes de réalisation, le ressort interne en appui sur la pièce mobile est aussi en appui sur une partie du pointeau.

Grâce à ces dispositions, le déplacement du pointeau provoque l'augmentation de la force appliquée sur le joint entourant le clapet, ce qui limite encore l'usure du joint pendant le déplacement de la tête du graisseur dans le dispositif et les risques de fuite de lubrifiant et/ou de gaz.

Dans des modes de réalisation, la pièce mobile interne comporte une ouverture traversante qui relie une chambre entourant le clapet à l'ouverture d'échappement. Grâce à ces dispositions, le gaz s'échappant du clapet rejoint l'ouverture d'échappement à travers la pièce mobile.

Selon l'invention, le dispositif comporte un carter présentant un filetage interne et une poignée solidaire du pointeau, le pointeau présentant un filetage externe correspondant au filetage interne du carter.

Grâce à ces dispositions, par simple rotation de la poignée, l'opérateur provoque le mouvement longitudinal du pointeau vers le clapet.

Dans des modes de réalisation, le dispositif comporte un guide du pointeau en translation.

Grâce à ces dispositions, l'opérateur n'a qu'à appuyer sur une poignée du pointeau pour faire exercer, à l'autre extrémité du pointeau, une force sur le clapet.

Dans des modes de réalisation, l'ouverture d'échappement de gaz présente un axe perpendiculaire à l'axe de déplacement du pointeau et est orientée parallèlement à des rails du logement vers l'accès de la tête du graisseur dans le logement.

Grâce à ces dispositions, même si l'accès à la tête du graisseur est limité dans une direction, par exemple par une paroi à proximité de ce graisseur, puisque l'opérateur positionne le dispositif sur la tête du graisseur par coulissement dans le logement, l'ouverture d'échappement de gaz et/ou de lubrifiant est orienté vers cette paroi et ne risque donc pas d'être orientée vers l'opérateur.

Dans des modes de réalisation, l'ouverture d'échappement comporte un moyen de solidarisation d'une canalisation.

Grâce à ces dispositions, un réservoir peut recueillir le gaz s'échappant du clapet ou un dispositif de contrôle de l'absence de fuite s'échappant par le graisseur peut être relié au graisseur.

### Brève description des figures

D'autres avantages, buts et caractéristiques particulières de l'invention ressortiront de la description non limitative qui suit d'au moins un mode de réalisation particulier du dispositif objet de la présente invention, en regard des dessins annexés, dans lesquels :
[Fig 1] représente, en perspective, un mode de réalisation particulier du dispositif objet de l'invention et un graisseur, avant montage du dispositif sur la tête du graisseur,
[Fig 2] représente, en perspective, le dispositif et le graisseur illustrés en figure 1, après montage du dispositif sur la tête du graisseur,
[Fig 3] représente, en coupe, un mode de réalisation particulier du dispositif objet de l'invention et un graisseur, avant montage du dispositif sur la tête du graisseur, avant appui d'un pointeau sur un clapet, ainsi qu'un plan B-B de section partiel utilisé pour réaliser la figure 5,
[Fig 4] représente, en élévation, le dispositif illustré en figure 3, après déplacement du pointeau vers le clapet, ainsi qu'un plan A-A de coupe utilisé pour réaliser la figure 3,
[Fig 5] représente, en section axiale partielle, un logement de tête du graisseur du dispositif illustré en figures 3 et 4,
[Fig 6] correspond à la figure 3 après montage du dispositif sur la tête du graisseur,
[Fig 7] correspond à la figure 4 après montage du dispositif sur la tête du graisseur,
[Fig 8] correspond à la figure 5 après montage du dispositif sur la tête du graisseur et
[Fig 9] représente une variante du dispositif illustré en figures 3 à 8, en coupe similaire à la coupe de la figure 3.

### Description des modes de réalisation

La présente description est donnée à titre non limitatif, chaque caractéristique d'un mode de réalisation pouvant être combinée à toute autre caractéristique de tout autre mode de réalisation de manière avantageuse.

On note, dès à présent, que les figures sont, chacune, à l'échelle mais, qu'entre elles, les échelles peuvent varier.

Dans toute la description, on appelle « inférieur » ce qui est proche ou orienté vers un logement d'une tête de graisseur, en bas sur les figures, et « supérieur » ce qui est éloigné de ce logement ou orienté vers l'autre côté, en haut sur les figures. De même, on appelle « interne », ce qui se trouve proche ou orienté vers un axe central du dispositif (axe représenté en 32 dans les figures) et « externe », ce qui se trouve éloigné ou orienté à l'opposé de l'axe central.

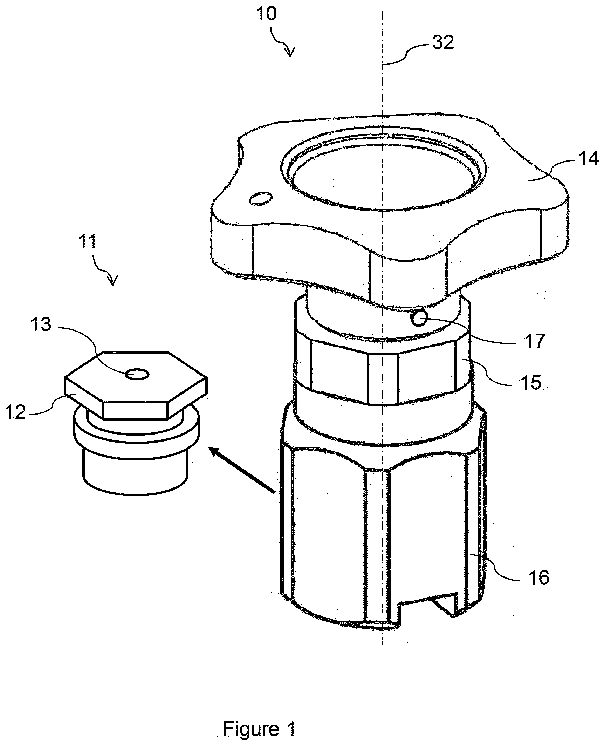

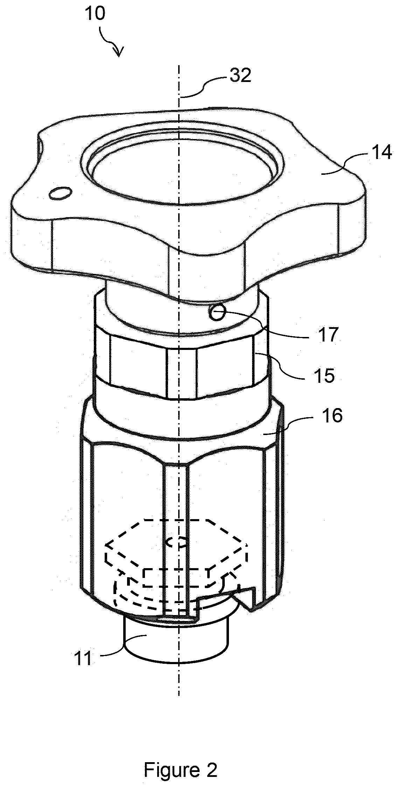

On observe, en figure 1, un dispositif 10 objet de l'invention et un graisseur 11. Une flèche indique le mouvement respectif du dispositif 10 par rapport au graisseur 11 pour effectuer le montage du premier sur le second. La figure 2 représente les mêmes éléments, après montage. Le graisseur représenté 11 comporte une tête 12 et un clapet anti-retour 13 accessible au milieu de la tête 12, qui obture une canalisation interne 29. Le graisseur 11 est aussi muni d'un épaulement intermédiaire 31. Lorsque le graisseur 11 est utilisé pour injecter un lubrifiant dans un robinet, une machine ou un autre organe (non représenté) auquel le graisseur 11 est associé, une canalisation de pompe est solidarisée à la tête 12. La mise sous pression du lubrifiant écarte le clapet 13 et permet le passage du lubrifiant à travers le graisseur 11.

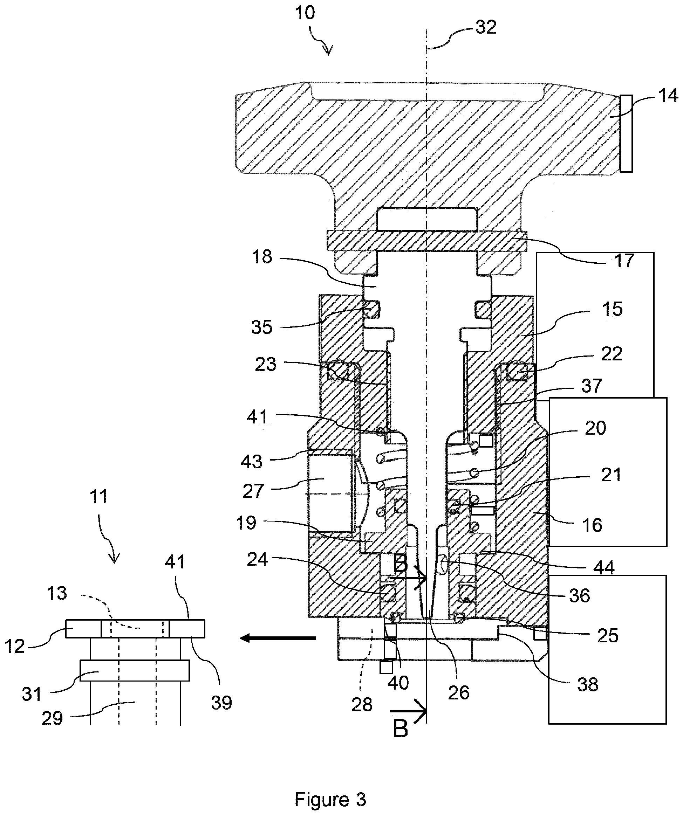

Le dispositif 10 comporte un corps, ou carter, constitué d'une partie inférieure 16 et d'une partie supérieure 15 solidarisées entre elles. Cette solidarisation est, dans les modes de réalisation des figures 3 à 9, constituée d'un filetage 37 et d'un joint torique 22.

Une poignée 14 surmonte le corps du dispositif. Dans les modes de réalisation représentés, une clavette 17 permet l'assemblage de la poignée 14 et d'un pointeau. Dans le mode de réalisation particulier illustré en figures 3 à 9, le dispositif 10 comporte, dans le corps 15 et 16, le pointeau 18 entourant l'axe central 32 et une pièce mobile interne 19. Un logement 28 de la tête 12 du graisseur 11 est formé dans la partie inférieure 16 du corps du dispositif.

Le pointeau 18 prend, dans les modes de réalisation illustrés en figures 3 à 9, une forme globalement en quatre troncs de cylindre successifs de diamètres décroissant de haut en bas, des épaulements séparant ces troncs de cylindre, une partie conique tronquée 26 poursuivant le dernier tronc de cylindre en bas du pointeau 18. Chacune de ces parties possède une fonction particulière, soit, de haut en bas :
- le tronc de cylindre supérieur a pour fonction la liaison avec la poignée 14,
- le deuxième tronc de cylindre a pour fonction de guider (en mouvement hélicoïdal dans les figures, en translation dans des variantes non représentées) le mouvement du pointeau 18 le long de l'axe 32,
- le troisième tronc de cylindre a pour fonction de guider en translation parallèle à l'axe 32, une pièce mobile interne 19,
- la quatrième tronc de cylindre a pour fonction de libérer une chambre d'évacuation de gaz à l'intérieur de la pièce mobile 19 et
- la partie 26 a pour fonction d'appuyer sur le clapet anti-retour du graisseur 11. Dans le mode de réalisation particulier illustré dans les figures 3 à 9, le logement 28 prend une forme en « C » allongé, avec deux rails parallèles 33 et 34 se prolongeant jusqu'à une butée 38. La face supérieure 30 des rails 33 et 34 vient en prise avec la face inférieure 39 de la tête 12. Les deux rails 33 et 34 guident le coulissement de la tête 12 dans le logement 28 et retiennent en position, avec la butée 38, la tête 12 dans le logement et en regard de l'extrémité inférieure 26 du pointeau 18. En d'autres termes, une fois engagée en butée dans le logement 28, la tête 12 ne peut pas faire de mouvement parallèlement à l'axe 32.

Dans des variantes non représentées, un verrou ou une mâchoire mobile mis en prise sous la face inférieure 39 de la tête 12, ferme le logement sur la tête 12.

Une ouverture 27 dans la partie inférieure 16 du corps du dispositif 10 permet l'échappement du gaz provenant du clapet 13.

Ainsi, le dispositif 10 de levée de doute de mise hors pression d'un graisseur 11 comporte :
- un logement 28 d'accueil de la tête 12 du graisseur 11, logement configuré pour interdire des mouvements de la tête 12 parallèlement à l'axe 32,
- un pointeau 18 présentant une extrémité 26 d'appui sur le clapet anti-retour 13 du graisseur 11,
- un moyen 14 de mise en mouvement du pointeau 18 vers le logement 28 d'accueil, parallèlement à l'axe 32 et
- une ouverture 27 d'échappement d'un gaz provenant du clapet anti-retour 13. Dans le mode de réalisation particulier illustré en figures 3 à 9, le dispositif 10 comporte une pièce mobile interne 19 dont une face inférieure 40, munie d'un joint 25 en forme de courbe fermée, par exemple torique, débouche dans le logement d'accueil 28. Une fois la tête 12 engagée en butée dans le logement 28, le joint 25 entoure le clapet anti-retour 13 et évite que du lubrifiant ou du gaz sous pression s'échappant du clapet 13 sorte du dispositif 10 le long du logement 28.

La pièce mobile 19 est mobile en translation parallèlement à l'axe 32, le long du pointeau 18. Un ressort hélicoïdal 20 applique une force verticale vers le bas sur la pièce mobile 19. Ce ressort 20 permet à la face inférieure 40 de la pièce mobile et au joint 25 de s'effacer dans le corps 16 pendant le coulissement de la tête 12 dans le logement 28. La tête 12 n'est, ainsi, pas empêchée de coulisser dans le logement 28 par le joint saillant dans le logement 28, d'une part, et le joint 25 n'est pas soumis à un frottement trop important qui le détériorerait rapidement s'il était immobile, d'autre part.

Dans le mode de réalisation représenté, le ressort 20 est en appui interne sur la partie haute 15 du corps du dispositif 10.

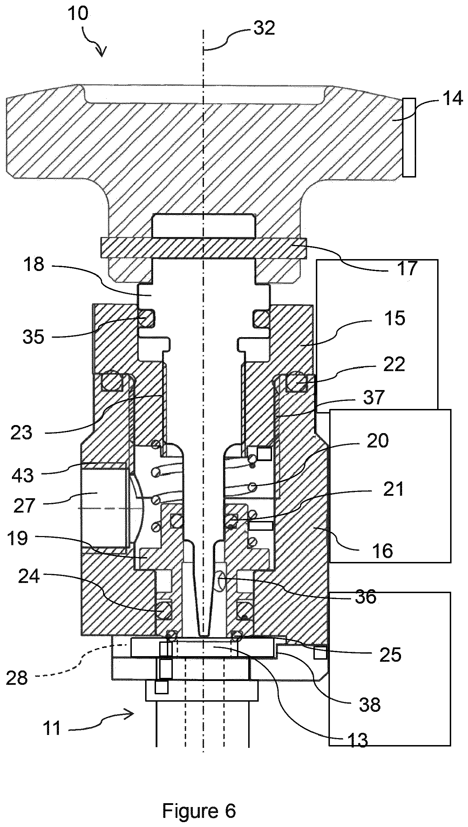

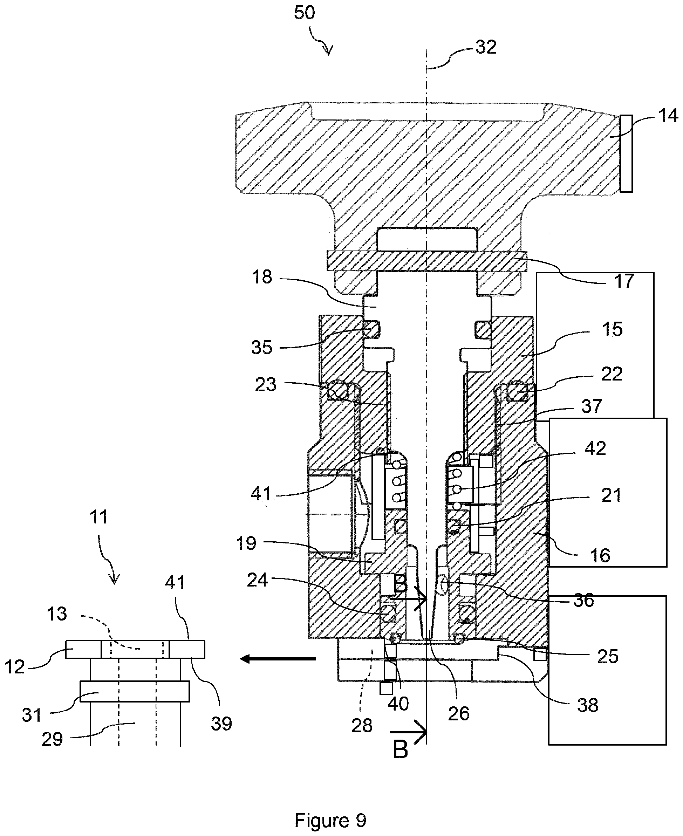

Dans la variante 50 du dispositif objet de l'invention représentée en figure 9, un ressort 42 est en appui sur un épaulement 41 du pointeau 18. De cette manière, lorsque le pointeau 18 effectue un mouvement vers le bas parallèlement à l'axe 32 sous l'effet d'une action effectuée par l'opérateur sur la poignée 14, comme expliqué plus loin, la force exercée par le ressort 42 croît et le joint 25 est plaqué et écrasé sur la face supérieure 41 de la tête 12, ce qui réduit encore les risques de fuite de gaz ou de lubrifiant. Inversement, lorsque le pointeau 18 est en position haute, comme en figures 3 et 6, la force exercée par le ressort 42 sur la pièce mobile 19 est réduit, voire nul, ce qui facilite le coulissement de la tête 12 dans le logement 28 et réduit le frottement sur le joint 25.

La pièce mobile interne 19 comporte une ouverture traversante 36 qui relie une chambre entourant le clapet 13 à l'ouverture d'échappement 27. Lors de l'insertion du dispositif 10 sur le graisseur 11, la pièce mobile 19 remonte. De ce fait, en actionnant la poignée 14, le pointeau 18 appuie sur le clapet anti-retour 13 du graisseur 11, libérant le gaz par l'orifice 36. La pièce mobile 19 étant en position élevée, et n'étant plus sur l'épaulement 44 interne du corps 16, le gaz est évacué entre l'épaulement 44 et la pièce mobile 19 vers l'orifice 27. On note, à ce propos, qu'aucun dispositif d'étanchéité n'est prévu au niveau de cet épaulement 44.

Dans le mode de réalisation représenté dans les figures 3 à 9, la partie haute 15 du corps du dispositif 10 présente un filetage interne 23 et le pointeau 18 présente un filetage externe correspondant au filetage interne 23. Par rotation de la poignée 14 autour de l'axe 32, l'opérateur provoque ainsi la descente ou la remontée du pointeau 18 et l'appui, par l'extrémité 26 de ce pointeau 18 sur le clapet anti-retour 13.

Dans des variantes (non représentées), le corps 15 et 16 du dispositif 10 comporte un guide du pointeau en translation parallèlement à l'axe 32. Dans ce cas, l'opérateur appuie sur la poignée 14 pour ouvrir le clapet anti-retour 13.

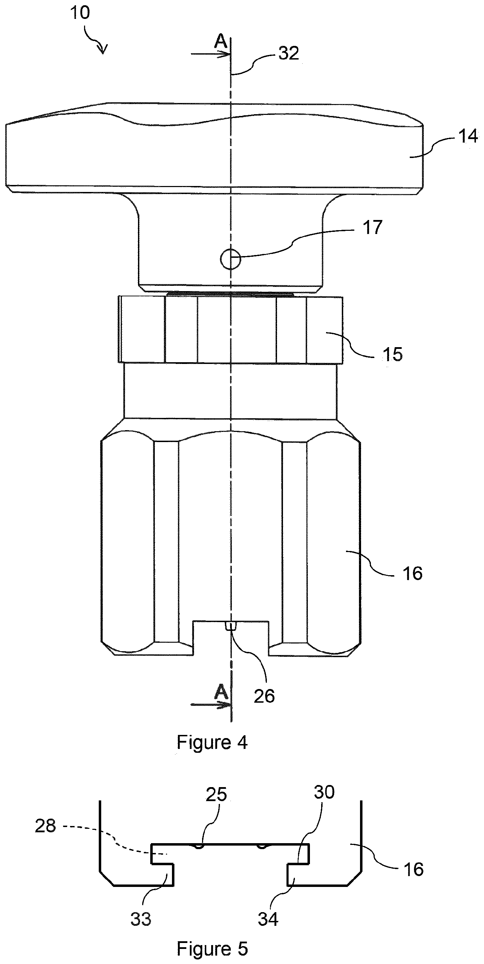

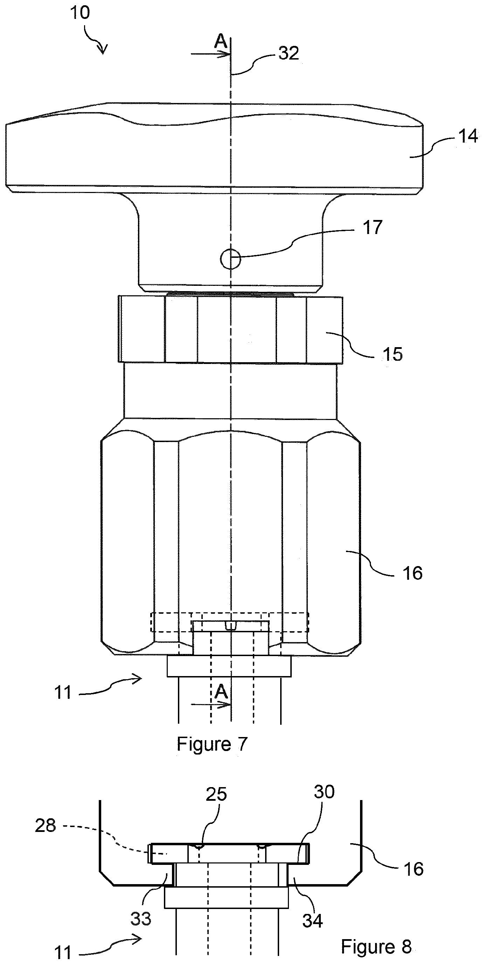

Dans les deux cas, la poignée 14 constitue un moyen de mise en mouvement du pointeau 18 vers le logement d'accueil 28, parallèlement à l'axe 32. Comme illustré en figures 4 et 7, l'extrémité inférieure 26 du pointeau pénètre ainsi dans le logement 28 et appuie sur le clapet anti-retour 13, ce qui a pour effet de l'ouvrir.

Par l'action sur la poignée 14, l'opérateur peut ainsi réaliser une levée de doute sur la pression interne au graisseur 11.

L'ouverture d'échappement 27 présente un axe perpendiculaire à l'axe 32 de déplacement du pointeau 18 et est orientée parallèlement aux rails 33 et 34 vers l'accès de la tête 12 du graisseur 11 dans le logement 18, accès à gauche en figures 3, 6 et 9.

Dans des modes de réalisation, l'ouverture d'échappement 27 comporte un moyen de solidarisation d'une canalisation (non représentée). Ce moyen de solidarisation est, dans les figures 3 et 6, un filetage 43. Ce filetage 43 permet la connexion d'une tubulure sur l'ouverture d'échappement 27 afin d'orienter l'éventuel jet de gaz dans une direction choisie ou une canalisation d'évacuation de ce gaz, par exemple vers un réservoir ou un dispositif de contrôle de l'absence de fuite s'échappant par le graisseur.

Dans des variantes, le joint torique 25 est complété ou remplacé par un joint torique retenu dans une gorge du corps 16 entourant l'ouverture de ce corps 16 dans laquelle se déplace la pièce mobile 19.

Divers joints toriques, par exemple nitriles, 21, 22, 24 et 35 assurent l'étanchéité du dispositif 10.

L'opération de vérification d'absence de pression avant démontage d'un graisseur 11 se présente comme suit :
- nettoyage à l'air comprimé de la tête 12 du graisseur 11 pour retirer des saletés et graisses anciennes susceptibles de pénétrer dans le graisseur,
- mise en place du dispositif 10 sur la tête 12 du graisseur 11,
- manoeuvre de la poignée 14 pour ouvrir le clapet 13, ce qui provoque la mise à l'évent de la partie interne du graisseur 11.

La mise en oeuvre du dispositif objet de l'invention permet :
- des interventions conformes à la politique de sécurité de l'opérateur,
- la maîtrise d'un processus industriel,
- la pérennité des graisseurs assurée dans le temps,
- l'identification de défaillances internes d'étanchéité du graisseur,
- la fiabilisation de la maintenance et des remplacements des graisseurs,
- la réduction des évents de gaz associés au remplacement de graisseurs et
- la réduction des indisponibilités de réseaux de gaz.

## Revendications

1. Dispositif (10, 50) de levée de doute de mise hors pression d'un graisseur (11), **caractérisé en ce qu'**il comporte :
- un logement d'accueil (28) d'une tête (12) du graisseur configuré pour interdire des mouvements de la tête du graisseur parallèlement à un axe (32),
- un pointeau (18) présentant une extrémité (26) d'appui sur un clapet anti-retour (13) du graisseur,
- un moyen (14) de mise en mouvement du pointeau vers le logement d'accueil, parallèlement à l'axe,
- un carter (15) présentant un filetage interne (23),
- une poignée (14) solidaire du pointeau (18), le pointeau présentant un filetage externe correspondant au filetage interne du carter, et
- une ouverture (27) d'échappement d'un gaz provenant du clapet anti-retour.

2. Dispositif (10, 50) selon la revendication 1, dans lequel le logement d'accueil (28) comporte deux rails (33, 34) parallèles de guidage et de retenue de la tête (12) du graisseur (11) et une butée (38) à une extrémité des rails de guidage.

3. Dispositif (10, 50) selon l'une des revendications 1 ou 2, qui comporte :
- une pièce mobile interne (19) dont une face (40), munie d'un joint (25) en forme de courbe fermée, débouche dans le logement d'accueil (28) et
- un ressort interne (20, 42) en appui sur la pièce mobile (19), la pièce mobile interne étant guidée en translation par le pointeau (18).

4. Dispositif (50) selon la revendication 3, dans lequel le ressort interne en appui sur la pièce mobile est aussi en appui sur une partie du pointeau.

5. Dispositif (10, 50) selon l'une des revendications 3 ou 4, dans lequel la pièce mobile interne (19) comporte une ouverture traversante (36) qui relie une chambre entourant le clapet à l'ouverture d'échappement (27).

6. Dispositif selon l'une des revendications 1 à 5, qui comporte un guide du pointeau en translation.

7. Dispositif (10, 50) selon l'une des revendications 1 à 6, dans lequel l'ouverture (27) d'échappement de gaz présente un axe perpendiculaire à l'axe (32) de déplacement du pointeau (18) et est orientée parallèlement à des rails (33, 34) du logement (28) vers l'accès de la tête (12) du graisseur (11) dans le logement.

8. Dispositif (10, 50) selon l'une des revendications 1 à 7, dans lequel l'ouverture (27) d'échappement comporte un moyen (43) de solidarisation d'une canalisation.

## Patentansprüche

1. Vorrichtung (10, 50) zur Sicherstellung, dass ein Schmiernippel (11) drucklos gemacht wurde, **dadurch gekennzeichnet, dass** sie Folgendes umfasst:
- ein Aufnahmegehäuse (28) für einen Schmiernippelkopf (12), das so konfiguriert ist, dass es Bewegungen des Schmiernippelkopfes parallel zu einer Achse (32) verhindert,
- eine Nadel (18), deren eines Ende (26) an einem Rückschlagventil (13) des Schmiernippels aufliegt,
- ein Mittel (14), um die Nadel parallel zur Achse in Richtung des Aufnahmegehäuses zu bewegen,
- ein Gehäuse (15) mit Innengewinde (23),
- ein fest mit der Nadel (18) verbundener Griff (14), wobei die Nadel ein Außengewinde besitzt, das in das Innengewinde des Gehäuses passt, und
- eine Öffnung (27) für das Ausströmen von Gas aus dem Rückschlagventil.

2. Vorrichtung (10, 50) nach Anspruch 1, wobei das Aufnahmegehäuse (28) zwei parallele Führungs- und Halteschienen (33, 34) für den Kopf (12) des Schmiernippels (11) und einen Anschlag (38) an einem Ende der Führungsschienen umfasst.

3. Vorrichtung (10, 50) nach einem der Ansprüche 1 oder 2, die Folgendes umfasst:
- ein bewegliches Innenteil (19), dessen eine Seite (40), versehen mit einer Dichtung (25) in Form einer geschlossenen Kurve, in das Aufnahmegehäuse (28) mündet, und
- eine Innenfeder (20, 42), die auf dem beweglichen Teil (19) aufliegt, wobei das bewegliche Innenteil durch die Nadel (18) längsverschieblich geführt wird.

4. Vorrichtung (50) nach Anspruch 3, wobei die Innenfeder, die auf dem beweglichen Teil aufliegt, ebenfalls auf einem Teil der Nadel aufliegt.

5. Vorrichtung (10, 50) nach einem der Ansprüche 3 oder 4, wobei das bewegliche Innenteil (19) eine durchgehende Öffnung (36) aufweist, die eine Kammer um die Klappe mit der Auslassöffnung (27) verbindet.

6. Vorrichtung nach einem der Ansprüche 1 bis 5, die eine Nadelführung zur Längsverschiebung umfasst.

7. Vorrichtung (10, 50) nach einem der Ansprüche 1 bis 6, wobei die Gasauslassöffnung (27) eine Achse senkrecht zur Achse (32) der Nadelbewegung (18) aufweist und parallel zu den Schienen (33, 34) des Gehäuses (28) in Richtung Zugang zum Kopf (12) des Schmiernippels (11) im Gehäuse ausgerichtet ist.

8. Vorrichtung (10, 50) nach einem der Ansprüche 1 bis 7, wobei die Auslassöffnung (27) ein Mittel (43) zur Befestigung einer Leitung umfasst.

## Claims

1. Device (10, 50) for confirming the depressurisation of a lubricator (11), **characterized in that** it comprises:
- a carrier receptacle (28) for a head (12) of the lubricator, configured to prevent movements of the head of the lubricator parallel to an axis (32);
- a needle (18) having one extremity (26) resting on a check valve (13) of the lubricator;
- a means (14) for setting the needle in motion, towards the carrier receptacle and parallel to the axis;
- a housing (15) having an internal thread (23);
- a handle (14) secured to the needle (18), the needle having an external thread matching the internal thread of the housing; and
- an exhaust opening (27) for gas coming from the check valve.

2. Device (10, 50) according to claim 1, wherein the carrier receptacle (28) comprises two parallel tracks (33, 34) for guiding and holding the head (12) of the lubricator (11) and a stop (38) at one end of the guide tracks.

3. Device (10, 50) according to one of claims 1 or 2, which comprises:
- an internal moving part (19), one side (40) of which, having a seal (25) with a closed curve shape, emerges in the carrier receptacle (28); and
- an internal spring (20, 42) bearing on the moving part (19), the internal moving part being guided in translation by the needle (18).

4. Device (50) according to claim 3, wherein the internal spring bearing on the moving part is also bearing on a portion of the needle.

5. Device (10, 50) according to one of claims 3 or 4, wherein the internal moving part (19) comprises a through-opening (36) that connects a chamber surrounding the valve to the exhaust opening (27).

6. Device according to one of claims 1 to 5, which comprises a guide for the needle in translation.

7. Device (10, 50) according to one of claims 1 to 6, wherein the gas exhaust opening (27) has an axis perpendicular to the axis (32) of movement of the needle (18) and is oriented parallel to the tracks (33, 34) of the receptacle (28) towards the access of the head (12) of the lubricator (11) in the receptacle.

8. Device (10, 50) according to one of claims 1 to 7, wherein the exhaust opening (27) comprises a means (43) for attaching a pipe.
